**Europäisches Patentamt**

**European Patent Office**

**Office européen des brevets**

(11) Numéro de publication : **0 048 701**
**B1**

(12) ## FASCICULE DE BREVET EUROPÉEN

(45) Date de publication du fascicule du brevet :
28.05.86

(51) Int. Cl.⁴ : **B 23 P 15/00**

(21) Numéro de dépôt : **81830162.4**

(22) Date de dépôt : **16.09.81**

(54) Procédé de fabrication d'éléments de raccorderie pour tubes.

(30) Priorité : 24.09.80 IT 2487880

(43) Date de publication de la demande :
31.03.82 Bulletin 82/13

(45) Mention de la délivrance du brevet :
28.05.86 Bulletin 86/22

(84) Etats contractants désignés :
**AT BE DE FR GB NL**

(56) Documents cités :
EP-A- 0 013 040
DE-B- 1 625 981
FR-A- 567 611
FR-A- 2 379 331
US-A- 1 408 390
US-A- 3 109 479
US-A- 3 266 822

(73) Titulaire : **Sebastiani, Enrico**
**13, Via De Cristoforis**
**I-20124 Milan (IT)**

(72) Inventeur : **Sebastiani, Enrico**
**13, Via de Cristoforis**
**I-20124 Milan (IT)**
Inventeur : **Archi, Augusto**
**16, Via Gramsci**
**I-21047 Saronno (Varese) (IT)**

(74) Mandataire : **Dr. Ing. A. Racheli & C.**
**Viale San Michele del Carso, 4**
**I-20144 Milano (IT)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention est relative à un procédé pour la production industrielle d'éléments de raccorderie pour tubes, d'une manière particulière mais non exclusive, des éléments destinés à faire partie d'un ensemble de trois constituants qui forment conjointement une pièce appelée raccord permettant la liaison de deux tubes (voir, par exemple les normes italiennes d'unification UNI 5211/70).

On connaît bien des éléments de raccorderie de même type ou semblables à ceux qu'on vient de spécifier, dont l'emploi est très répandu et qui forment l'objet de normes d'unification. D'une manière générale, ces pièces sont obtenues par des moulages en fonte malléable que l'on soumet ensuite à un usinage. Cette technique de fabrication est devenue à l'heure actuelle de plus en plus onéreuse ; elle conduit en outre à l'obtention de produits d'une précision relativement peu élevée ou qui demandent à être soumis à des opérations ultérieures d'usinage d'une importance considérable, donc coûteuses. De plus, la matière utilisée, qui est imposée par les conditions de formation des moulages, n'a pas montré d'être la matière idéale pour les sollicitations auxquelles les éléments de raccorderie sont assujettis en général.

Dans l'alternative, il a été déjà proposé de réaliser ces pièces de raccorderie au moyen d'opérations d'extrusion-estampage, à froid ou à chaud, exécutées à partir d'une pastille de matière appropriée, du laiton par exemple, dans des étampes ou matrices reproduisant la configuration finale des éléments désirés. Toutefois, si d'une part cette technique a permis d'atteindre une précision remarquable par l'usage · d'une matière plus appropriée, elle a d'autre part posé d'autres problèmes qui ont en pratique limité notablement son utilisation dans le plan industriel. En effet, les opérations mentionnées ci-dessus mettent en jeu des forces de déformation extrêmement élevées et demandent de ce fait l'emploi d'équipements particulièrement onéreux et, malgré cela, de durée limitée. En outre, la matière traitée devant posséder des caractéristiques particulières, est elle-même relativement coûteuse. De plus, à cause des puissances élevées mises en jeu, les opérations connues d'extrusion-estampage sont des opérations lentes qui ne permettent d'atteindre qu'une productivité modeste.

Dans le vieux brevet US-A-1 408 390, on décrit un procédé de formation à chaud d'un raccord mâle et femelle ayant des parois à épaisseur différenciées.

Le brevet US-A-3 266 822 décrit la formation en coupe de l'extrémité d'un tube dans lequel ses parois sont repliées diverses fois sur elles mêmes en exerçant sur celles-ci une force supérieure à la charge de flambage.

Le brevet FR-A-567 611 décrit la formation d'une collerette double à l'extrémité d'un tube, et sous cette collerette une surépaisseur de renfort. Dans ce cas, le poinçon pénètre complètement dans la matrice renfermant ainsi l'extrémité déformée du tube.

Or, le but de la présente invention est de proposer un procédé qui permet de réaliser des éléments de raccorderie du type et aux applications spécifiés ci-dessus, ces éléments ayant un degré de précision comparable à celui réalisé par lesdites opérations d'extrusion-estampage, mais pouvant être fabriqués par un procédé qui permette de réduire les coûts et d'augmenter la productivité non seulement vis-à-vis dudit système d'extrusion-estampage, mais aussi par rapport au moulage de fonte.

Les buts ci-dessus ont été atteints comme il a été décrit dans la revendication 1 annexée.

Les nombreux avantages et particularités de l'invention seront d'ailleurs mieux compris à la lecture de la description suivante qui se réfère à quelques exemples de mise en œuvre donnés à titre purement illustratif et nullement limitatif à l'appui des dessins annexés, dans lesquels :

La figure 1 est une vue de face, partie en coupe, des éléments de raccorderie pouvant être réalisés selon un mode de mise en œuvre de l'invention, les éléments étant représentés dans la condition assemblée d'un raccord permettant la jonction bout à bout ou d'extrémité, de deux tubes ;

La figure 2 est une vue correspondant à celle de figure 1, mais illustrant un raccord de type mâle, pourvu d'une lèvre d'étanchéité conique ;

La figure 3 est une vue perspective schématique illustrant les phases initiales d'étirage et de coupe d'un tube pour obtenir un élément de raccorderie selon les figures précédentes ;

La figure 4 représente schématiquement les phases de déformation et d'usinage qui permettent d'obtenir, à partir du tronçon tubulaire de figure 3, un écrou de raccord ;

La figure 5 représente d'une manière schématique les outils, et les phases de déformation du tronçon tubulaire qui permettent de réaliser ledit écrou ;

La figure 6 est une vue perspective schématique, avec certaines parties en coupe, illustrant les phases de travail exécutées sur un tronçon tubulaire pour obtenir la pièce folle ou mobile du raccord de figure 1 ;

La figure 7 représente schématiquement les phases de déformation utilisées pour mettre à effet le procédé illustré à la figure 6 ;

La figure 8 montre schématiquement les phases de déformation exécutées sur un tronçon tubulaire pour réaliser la pièce fixe de figure 2, mais de type femelle ;

La figure 9 est une vue schématique illustrant les phases de déformation et les outils correspondants, utilisés pour la mise en œuvre du procédé suivant la figure 8 ;

La figure 10 montre schématiquement, de la même façon que les figures 6 et 8, le procédé pour obtenir un élément de raccorderie différent, semblable à celui de figure 6, mais de type mâle, à partir cette fois d'un tube cylindrique, c'est-à-dire un tube n'ayant pas été assujetti à un étirage préalable ;

La figure 11 montre schématiquement les phases de déformation et les outils correspondants, employés pour mettre en œuvre le procédé selon la figure 10.

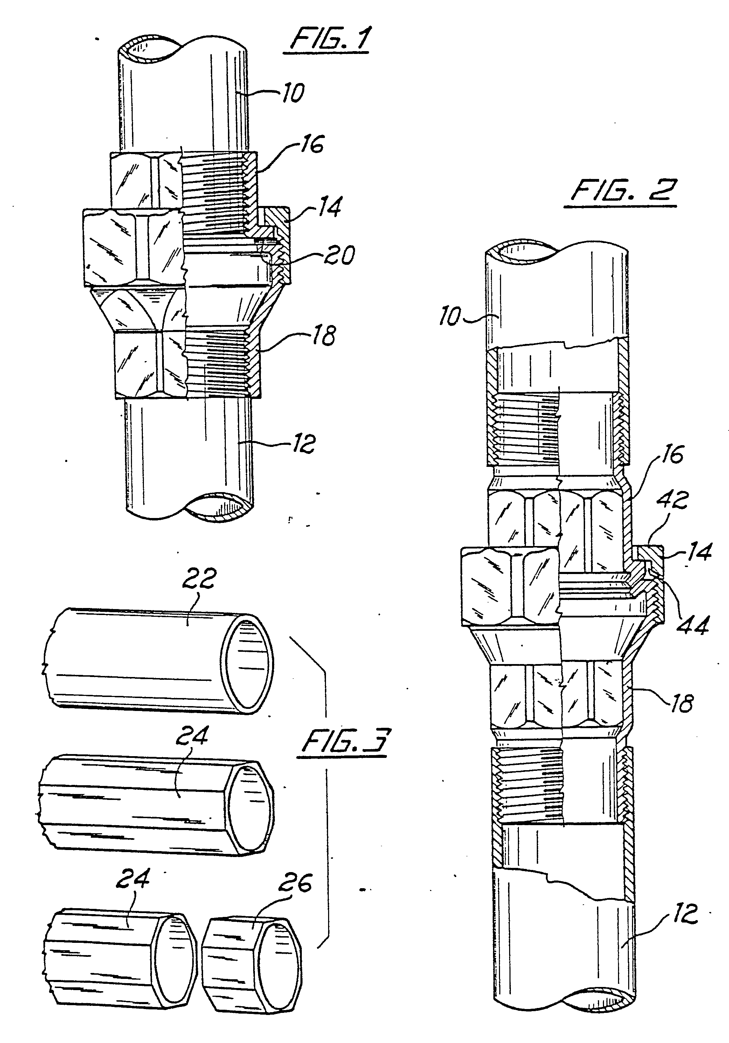

Comme on le sait, pour réaliser une jonction, par exemple une union bout à bout, ou d'extrémité, de deux tubes-tels que les tubes 10 et 12 — on fait usage de raccords à plusieurs éléments ou pièces, qui sont des pièces non seulement bien connues mais aussi normalisées, pour ce qui concerne certaines de leurs dimensions. Des exemples d'ensembles comprenant lesdits éléments sont illustrés aux figures 1 et 2.

Ces ensembles sont constitués d'un premier élément ou écrou 14 destiné à serrer le raccord, d'un deuxième élément ou pièce folle 16 pouvant se fixer au tube 10, et d'un troisième élément ou pièce fixe 18 qui peut être rendue solidaire du tube 12. Les éléments 16 et 18 peuvent être de type femelle ou de type mâle, avec accouplement plan ou conique, et prévoir l'interposition ou non d'une garniture 20, comme cela est bien connu dans la technique de l'art.

L'invention offre maintenant la possibilité de réaliser les pièces mentionnées çi-dessus, en partant d'un élément tubulaire en acier de faible épaisseur, mais toujours d'épaisseur supérieure à 2 mm environ, qui est assujetti à des opérations de déformation, en particulier sous l'effet de sollicitations principalement axiales et sous des forces relativement limitées.

L'invention prévoit, pour la plupart des éléments de raccorderie considérés, une phase préalable qui consiste à étirer un tube 22 (figure 3) de façon à obtenir un élément tubulaire 24 comportant une surface extérieure de forme polygonale, en particulier de forme octogonale ou hexagonale à arêtes arrondies, qui permet audit élément d'être saisi ou serré avec une clé de type connu du marché. En vue de cette opération d'étirage, le choix de la conformation extérieure de l'élément tubulaire 24 et le choix des épaisseurs du tube de départ 22 sont faits d'une part de manière à conserver à l'élément tubulaire 24 des épaisseurs minimum telles qu'elles permettent de conduire sur cet élément les opérations ultérieures jusqu'à en obtenir la pièce de raccordement désirée, dotée bien entendu des caractéristiques recherchées de résistance aux pressions, tandis que d'autre part lesdits choix sont influencés aussi par la considération qu'il convient d'effectuer l'étirage en une seule passe, et ce pour des raisons d'économie, tout spécialement par ce qu'on évite ainsi d'avoir recours à des opérations de traitement thermique intermédiaire.

A la suite de ladite opération d'étirage, l'élément tubulaire est coupé en tronçons de tube 26, chacun selon une dimension axiale préfixée, en vue des opérations ultérieures.

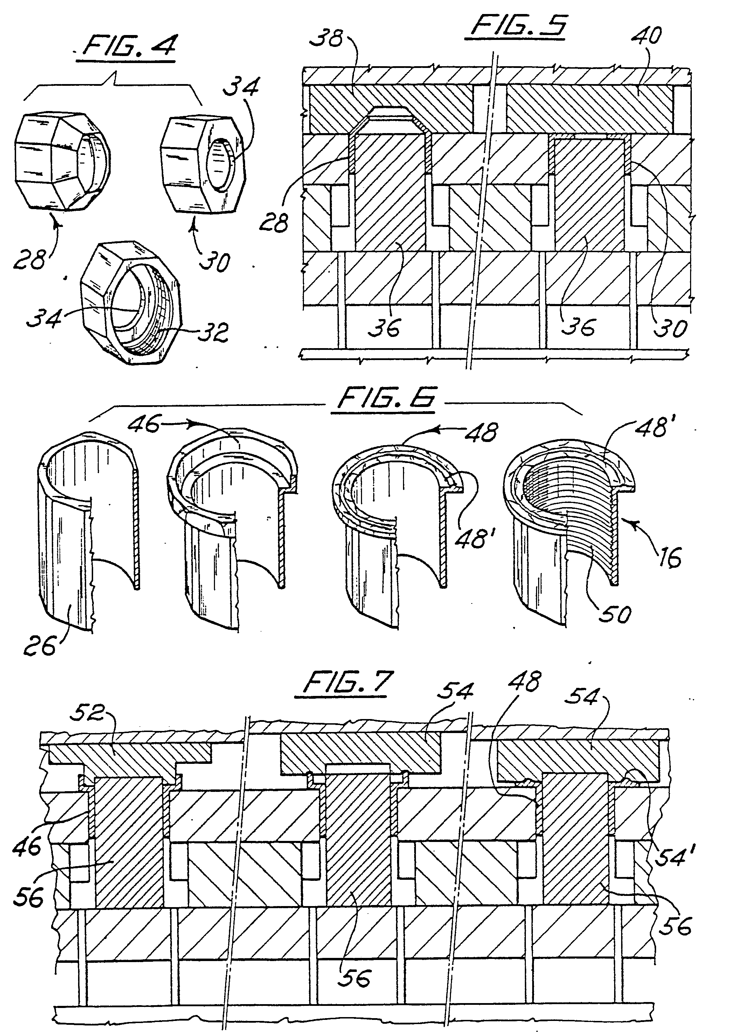

Dans le cas de formation de l'écrou 14, le procédé de l'invention prévoit une déformation locale vers l'intérieur des parois du tronçon de tube 26, qui se fait de préférence en au moins deux phases, comme indiqué en 28 et 30 sur la figure 4, jusqu'à obtenir la configuration générale de l'élément 14, celui-ci étant par la suite usiné sur sa surface 32 (figure 4) pour réaliser le filetage intérieur, et, s'il le faut, sur sa surface 34 pour définir le diamètre de l'ouverture correspondante. Les deux phases de déformation illustrées à la figure 4 sont représentées aussi à la figure 5, où l'on voit que le tronçon tubulaire étiré 26, qui a été engagé sur un mandrin 36, est mis en contact avec un poinçon de déformation à configuration conique 38, puis avec un poinçon de forme plane 40, qui permet de déformer le tronçon 26, comme cela est montré en 28 et 30, sous l'effet d'une sollicitation essentiellement de compression axiale exercée sur ledit tronçon. Ainsi qu'on peut le noter sur la figure 5, le poinçon est conçu de manière à assurer l'existence d'une zone permettant à la matière une libre expansion, dirigée radialement vers l'intérieur dans l'exemple illustré, et ce afin que les sollicitations spécifiques ne puissent pas augmenter au-delà de la limite de déformation de la matière elle-même. Par ailleurs, il est prévu que les surfaces supérieure et inférieure de l'élément 14 comporteront certaines irrégularités de forme, dues à une distribution incomplète de la matière, en particulier des parties plus épaisses après l'étirage, qui sont laissées pour ne pas excéder en forces de déformation, et ne pas influer sur les épaisseurs.

En effet, et ce qu'on va dire s'applique également dans le cas des éléments décrits plus loin, l'opération de déformation du tronçon tubulaire est exécutée, pour sa plus grande partie, en pliant simplement la pièce, ce qui est effectué par l'emploi de forces relativement limitées, en vue des petites sections présentées par le tronçon tubulaire. A ces forces limitées correspond par conséquent un travail réduit des presses utilisées. Ce n'est qu'à la fin de la déformation (figure 5, à droite) qu'il a lieu une phase terminale très courte au cours de laquelle la matière est assujettie à une opération d'écrasement, celle-ci étant cependant effectuée elle-même sous l'effet de forces réduites (étant donné qu'on laisse subsister les irrégularités qui délimitent la surface sur laquelle vient agir la pression spécifique d'écrasement) et avec des courses très courtes, donc avec un travail réduit.

La figure 6 représente l'opération qui permet de réaliser l'élément désigné par 16 à la figure 1, à partir du tronçon 26 préalablement étiré. Ce tronçon est d'abord élargi en forme de douille, dans sa zone d'extrémité 46, comme montré sur la figure, puis cette zone terminale est complètement aplatie comme indiqué par 48, et enfin la pièce est usinée pour la munir du filetage 50. Il est aussi possible de replier la zone d'extrémité 46 vers l'axe de la pièce pour obtenir la pièce 16 illustrée à la figure 2.

Les opérations pour passer du tronçon tubulaire 26 aux pièces semi-finies 46 et 48 sont représentées à la figure 7. On voit dans cette figure que le tronçon 26 est d'abord évasé à son extrémité par l'action sur cette extrémité d'un poinçon 52, ce qui donne le produit semi-fini 46, à la suite de quoi ce produit passe sous poinçon plat 54 qui permet de réaliser le produit semi-fini 48. Comme dans le cas précédent, un mandrin 56 est inséré à l'intérieur du tronçon 26 et ce dernier est sollicité en direction axiale, la matière de la pièce étant laissée libre de s'expanser au moins dans une zone entre poinçon et la matrice (dans ce cas l'expansion étant dirigée vers l'extérieur).

Pour assurer la conservation des épaisseurs dans la partie bridée du produit semi-fini 48, on a pourvu le poinçon 54 d'un évidement 54′ dans lequel vient se loger, avant la fermeture de la matrice par le poinçon, le bord extérieur de l'extrémité évasée en forme de douille du produit semi-fini 46. Cette partie évasée est donc refoulée par le poinçon 54 et est formée par écrasement, de façon que la réduction d'épaisseur qu'elle avait subie au cours de la phase précédente est alors compensée et l'épaisseur ramenée à la valeur désirée.

La faible saillie 48′ (figure 6) qui demeurera dans la région du bord bridé de la pièce correspondant à l'évidement 54′, pourra servir à parfaire l'étanchéité de la garniture.

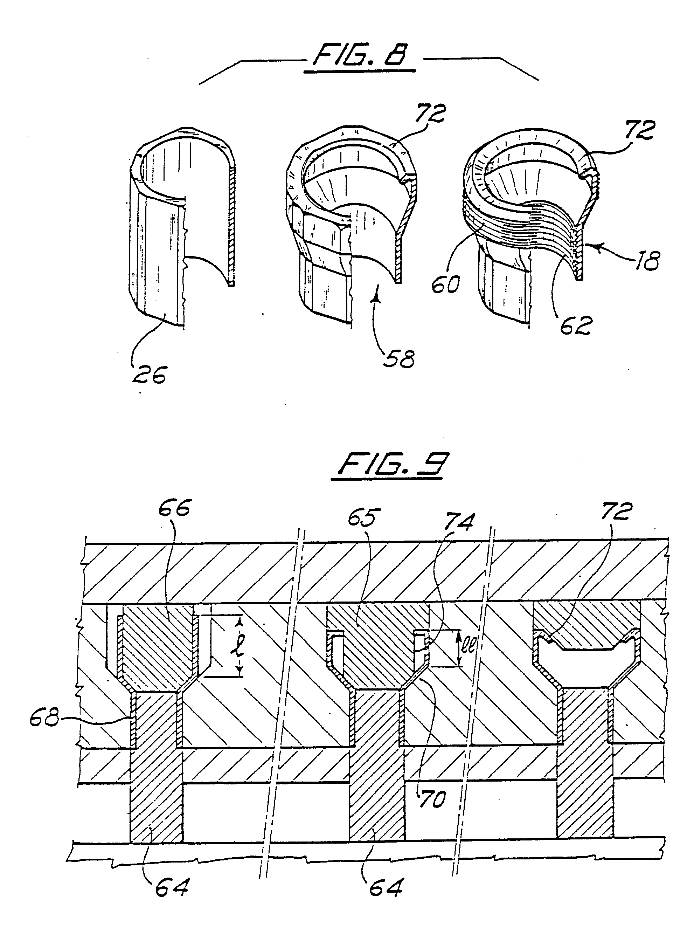

Le troisième élément 18 illustré aux figures 1 et 2, peut être obtenu, en partant également du tronçon tubulaire 26, au moyen d'une série d'opérations, telles que représentées schématiquement à la figure 8 en référence à la pièce conique de la figure 2. Ces opérations comprennent des phases de déformation pour obtenir le produit semi-fini 58 comprenant la lèvre 72 et des phases d'usinage qui permettent de réaliser les filetages 60 et 62 de façon à obtenir la pièce finie 18 de la fig. 2. La pièce 18 de la fig. 1 est obtenue par le même procédé, mais sans replier la lèvre 72.

La déformation est obtenue comme illustré à la figure 9, d'une manière particulière en plusieurs phases et, dans tous les cas, en montant le tronçon tubulaire sur un mandrin 64. Lors de la première phase, on introduit un élément extendeur 66 qui permet d'augmenter légèrement le diamètre du tronçon tubulaire 26 dans les limites admises par la matière. Ensuite, le produit semi-fini 68 est assujetti à déformation axiale, la pièce étant poussée et façonnée au contact de la matrice extérieurs 70, comme illustré dans la partie de milieu de la figure 9. Enfin, le bord rabattu 72 est formé (partie droite de figure 9).

Cette opération est exécutée non seulement en maintenant sous contrôle les épaisseurs de la matière — pour compenser la réduction d'épaisseur due à l'augmentation de diamètre, par le refoulement dû à la compression, jusqu'à obtenir des déformations finales plus importantes que celles qui seraient permises par la résistance à la déformation plastique de la matière — mais aussi et surtout en utilisant une technique particulière de compression. En effet, afin que le produit semi-fini 68, sollicité par compression, puisse se déformer jusqu'à venir exactement épouser la forme de la matrice extérieure 70, il est nécessaire que, selon l'invention, la sollicitation axiale soit supérieure à la limite de déformation plastique permante par compression de la section du tronçon, et inférieure à la charge de flambage de la zone libre du tronçon, du produit semi-fini 68. De cette façon, la zone libre de fléchir 1 du tronçon peut « bomber » vers l'extérieur. Il est toutefois encore nécessaire, après l'adaptation du produit semi-fini à la forme extérieure de la matrice 70, que la déformation se produisant d'une manière symétrique par rapport au centre se poursuive sous une charge inférieure à la charge de flambage de la nouvelle zone de libre fléchissement 11 du tronçon. Etant donné que l'épaisseur entrant en jeu est définie dans des limites assez restreintes et, en bonne substance, indépendamment du diamètre — en fonction du procédé d'usinage, il s'ensuit que la longueur de départ de la partie 1 du tronçon 26, qui est destinée à être déformée pour obtenir la zone évasée du produit semi-fini 58 (c'est-à-dire la longueur de la partie de tronçon 26 ou 62 dont le diamètre est modifié dans la matrice 70), varie elle aussi dans des limites très restreintes, et l'on a expérimentalement constaté que pour obtenir un produit semi-fini du type 58, il faut que cette longueur de départ ait une valeur aux environs de 35 mm et, de toutes façons, inférieure à 45 mm.

On a en effet constaté avec surprise qu'audehors desdites limites il était impossible d'obtenir une déformation du tronçon 26 permettant à la paroi extérieure de ce tronçon d'épouser parfaitement la forme de la matrice 70 et ce, bien entendu, en maintenant les épaisseurs et les autres conditions opérationnelles nécessaires.

De toute façon, aussi dans le cas de la déformation selon la figure 9, on donne à la matière une possibilité de libre expansion — en vue d'effectuer la déformation sous de faibles sollicitations spécifiques — en particulier dirigée vers l'intérieur, dans la partie désignée par 74.

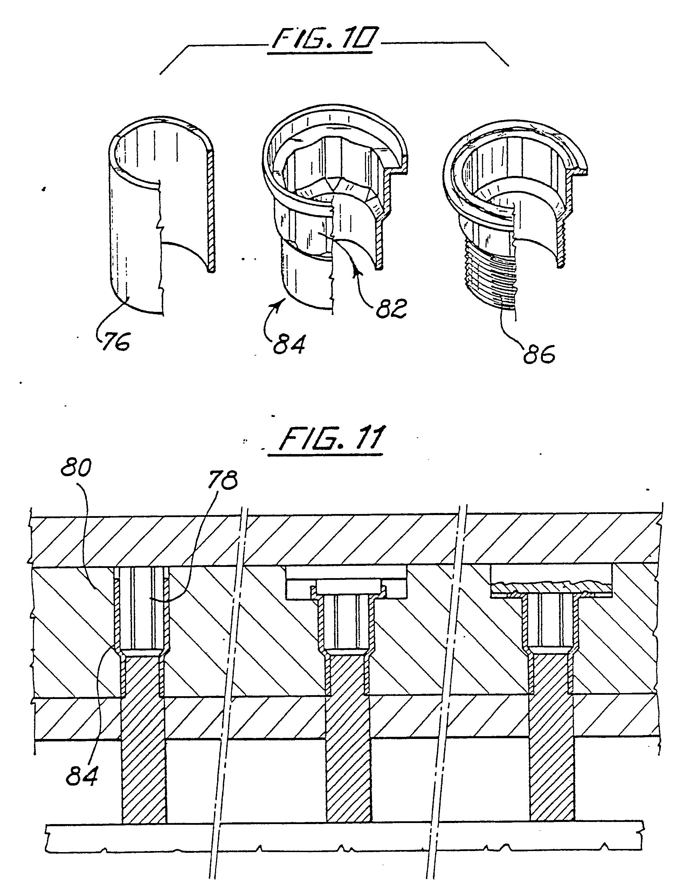

Dans le cas de pièces de type mâle, il est possible de prévoir une succession de phases opérationnelles qui sont exécutées en partant d'un tronçon tubulaire 76 (figure 10) non assujetti à étirage préalable. Ce tronçon est d'abord déformé au moyen d'un poinçon 78 et par l'action d'une matrice extérieure 80 (figure 11) en vue d'obtenir la zone polygonale 82, puis la lèvre supérieure du produit semi-fini 84 est pliée comme illustré dans les parties de milieu et de droite de figure 11, substantiellement sur la base des principes exposés plus haut en référence aux figures 6 et 7, après quoi la partie cylindrique du produit semi-fini 84 est usinée pour y former le filetage 86.

Quant aux autres modalités de mise en œuvre des opérations considérées, il y a lieu de noter qu'on effectue de préférence l'étirage en faisant usage de filières en vidia ayant des tolérances très étroites, de l'ordre de 0,01 mm par exemple, tandis qu'on conduit les opérations de déformation en utilisant un lubrifiant qui est d'une manière avantageuse un mélange antigrippant constitué d'huile et de soufre.

Par l'application du procédé décrit dans ce qui précède, il devient possible d'obtenir des éléments de raccorderie du type sus-spécifié d'une manière économiquement avantageuse, ces éléments étant en état de satisfaire à toutes les spécifications des normalisations en vigueur à présent, et étant caractérisés, vis-à-vis des raccorderies connues de l'art, essentiellement par le fait que ces éléments sont constitués en acier et qu'ils présentent en tous cas des angles de dépouille nuls. Une autre particularité distinctive des pièces de raccorderie obtenues selon le procédé de l'invention, par comparaison avec les pièces obtenues selon la technique connue, est représentée par les irrégularités particulières de leurs surfaces planes extérieures, irrégularités qu'on a décrites en relation avec l'écrou 14 mais qui se trouvent aussi dans tous les autres éléments considérés.

Il est de plus possible de réaliser, en faisant cependant abstraction des normalisations en matière, des pièces fixes et folles qui ne comportent pas de filetage de liaison avec le tube. Ces pièces, qui représentent un produit nouveau, peuvent d'une manière avantageuse et économique se fixer par soudage au tube, ce qui maintenant seulement est rendu possible grâce aux raccords en acier selon la présente invention.

Par rapport à des pièces semblables, réalisées par estampage de fer, on fait usage de presses de puissance 1/5-1/10 fois plus petite, et avec des vitesses de travail 5 fois plus élevées : il en résulte un coût d'investissement plus bas, avec une productivité plus importante.

**Revendications**

1. Procédé de fabrication d'un élément de raccorderie pour tubes dont l'épaisseur des parois du produit fini est sensiblement égale et non inférieure à celle du tube de départ, ayant compensé les diminutions d'épaisseur des parois produites pendant les précédentes opérations telles que l'étirage ou le pliage, ce procédé comprenant les phases de

a) couper un tube (22) en acier pour en obtenir un tronçon (26, 76) ayant une longueur prédéterminée ;

b) engager une partie dudit tronçon (26, 76) de tube sur un mandrin (36, 56, 64, 78) et au contact d'une matrice (70, 80) en laissant libre la partie terminale du tube devant être déformée ;

c) solliciter à froid la partie libre terminale dudit tronçon (26, 76) de tube en direction axiale par un poinçon (40, 54, 65) de façon à produire une sollicitation supérieure à la limite de déformation plastique permante par compression et inférieure à la charge de flambage de cette partie qui serait normalement libre de fléchir, la matrice et le poinçon étant agencés, lorsqu'ils sont fermés, de façon à définir entre-eux et la matière déformée un espace libre,

d) extraire l'élément de raccorderie ainsi obtenu de la matrice (70, 80).

2. Procédé selon la revendication 1 caractérisé en ce que la sollicitation est poussée jusqu'à obtenir un écrasement ou un refoulement de la partie libre du tronçon (26, 76).

3. Procédé selon la revendication 1 caractérisé par le fait que le tube (22) a une épaisseur supérieure à 2 mm et que la partie du tronçon (26, 76) pouvant librement fléchir a une hauteur de 35 mm (plus ou moins 25 %).

4. Procédé selon la revendication 1, caractérisé en ce qu'il prévoit en outre une phase initiale d'étirage ayant pour but de réaliser sur ledit tube (22) une surface extérieure octogonale ou hexagonale à arêtes arrondies.

5. Procédé selon la revendication 1, caractérisé par le fait qu'on prévoit antérieurement à la phase de déformation finale une opération d'évasement de la partie terminale par un premier poinçon (66), puis par un second poinçon (65) une sollicitation axiale de la partie terminale durant laquelle est exécuté un pliage partiel du tronçon (68), cette sollicitation étant supérieure à la limite de flambage de la partie du tronçon ayant une hauteur (1), provoquant ainsi la formation ultérieure d'un évasement de ladite partie qui va s'appuyer sur la matrice (70), cette même sollicitation étant poursuivie selon les étapes c) et d), mais s'appliquant sur une hauteur libre (11) de la partie terminale plus courte.

6. Procédé selon la revendication 1, caractérisé par le fait que l'élément de raccorderie ainsi obtenu peut être usiné, par exemple fileté ou bien directement soudé sur le tube.

7. Procédé selon une des revendications de 1 à 6, caractérisé en ce que l'élément de raccorderie présente des angles de dépouille nuls.

8. Procédé selon une des revendications de 1 à 7, caractérisés en ce qu'il est prévu aussi l'étape ultérieure de rebattre un bord (72, fig. 9).

9. Procédé selon l'une quelconque des revendications de 1 à 8 caractérisé en ce que le poinçon est pourvu avec un évidement (54') dans lequel vient se loger le bord extérieur du produit semi-fini (46).

**Claims**

1. A method of making a pipe fitting wherein the thickness of the walls in the finished product is very similar to and no less than that of the original pipe, by compensating for the reduction in thickness of the walls produced during the previous operations, such as drawing or bending ; said method comprising the following steps :

a) cutting a steel pipe (22) to obtain a blank (26, 76) having a predetermined length ;

b) inserting a part of said blank (26, 17) onto a mandrel (36, 56, 64, 78) and in contact with a die (70, 80), leaving free the end of the pipe to be deformed ;

c) cold stressing the free end of said blank (26, 76) along its axis by means of a punch (40, 54, 65), so as to produce a stress greater than the limit of permanent plastic deformation by compression and lower than that for the combined bending and compressive stress of that part which is free to bend ; the die and punch being arranged, when closed, in such a way as to leave a free space between themselves and the deformed material ;

d) extracting the pipe fitting obtained in this way from the die (70, 80).

2. A method according to claim 1, characterized in that the stress is increased until collapse or cold-heading of the free part of the blank (26, 76) is obtained.

3. A method according to claim 1, characterized in that the pipe (22) has a thickness greater than 2 mm. and the part of the blank (26, 66) which can bend freely is 35 mm. high (more or less 25 %).

4. A method according to claim 1, characterized in that it also provides for an initial step of drawing with the aim of giving said pipe (22) an octagonal or hexagonal external surface with rounded edges.

5. A method according to claim 1, characterized in that provision is made, before the final deformation step, for a belling operation on the blank end by means of a first punch (66), followed by axial stress on said blank end by means of a second punch (65), during which the blank (68) is partially bent ; said stress being greater than the limit load for combined bending and compressive stress on the blank part having a height (1), thus causing a further belling of said part which comes to rest on the die (70), then continuing with this same stress according to steps c) and d), being this stress now applied on a free height (11) which is less than that of the previous blank part.

6. A method according to claim 1, characterized in that the pipe fitting obtained in this way can be machined, for example, threaded or directly welded onto a pipe.

7. A method according to one of the claims from 1 to 6, characterized in that the pipe fitting has no draft angle.

8. A method according to one of the claims from 1 to 7, characterized in that a further step is also provided for creasing an edge (72, fig. 9).

9. A method according to any of the claims from 1 to 8, characterized in that the punch is provided with a recess (54') wherein the outer edge of the semimanufactured product is housed.

**Patentansprüche**

1. Verfahren zur Herstellung eines Anschlußnippels für Rohre, bei denen die Wandstärke des Fertigerzeugnisses merklich gleich und nicht geringer als die Wandstärke des Ausgangsrohres ist, wobei die während der vorausgegangenen Arbeitsgänge, wie Ziehen und Biegen, erzeugte Abnahme der Wandstärke ausgeglichen wird und folgende Vorgänge vorgesehen sind :

a) Schneiden eines Stahlrohres (22) zum Erhalten eines Abschnittes (26, 27) vorbestimmter Länge ;

b) Aufziehen eines Teils des Rohrabschnittes (26, 76) auf eine Spindel (36, 56, 64, 78), die mit einer Matrize (70, 80) in Berührung steht, wobei der zu verformende Endteil des Rohres freibleibt ;

c) Kaltziehen des freien Endteils des Rohrabschnittes (26, 76) in- Axialrichtung mit einem Stempel (40, 54, 65), um eine Beanspruchung zu erzeugen, die höher als die dauernde plastische Druckverformungsgrenze und geringer als die Knicklast jenes Teils, der normalerweise biegefrei sein würde, ist, wobei die Matrize und der Stempel in Schließstellung so angeordnet sind, daß zwischen ihnen und dem verformten Material ein freier Raum besteht ;

d) Abziehen des von der Matrize (70, 80) erhaltenen Anschlußnippels.

2. Verfahren nach Anspruch 1, dadurch gekennzeichnet, daß die Beanspruchung bis zum Erhalten der Stauchung des freien Teils des Abschnittes (26, 76) ausgeführt wird.

3. Verfahren nach Anspruch 1, dadurch gekennzeichnet, daß das Rohr (22) eine um 2 mm größere Stärke und und der Teil des Abschnittes (26, 76), der sich frei biegen kann, eine Höhe von 35 mm (mehr oder weniger 25 %) aufweist.

4. Verfahren nach Anspruch 1, dadurch gekennzeichnet, daß eine anfängliche Streckstufe vorgesehen ist, die den Zweck hat, auf dem Rohr (22) eine äußere sechs-oder achteckige Oberfläche mit abgerundeten Kanten zu verwirklichen.

5. Verfahren nach Anspruch 1, dadurch gekennzeichnet, daß vor der Endverformungsstufe ein Aussenkungsvorgang am Endteil mit einem ersten Stempel (66) und dann mit einem zweiten Stempel (65) eine Axialbeanspruchung des Endteils vorgesehen ist, während welcher eine teilweise Biegung des Abschnittes (68) erfolgt, wobei diese Beanspruchung größer als die Grenze der Knicklast des Teils des Abschnittes mit einer Höhe (1) ist und dadurch eine weitere Aussenkung dieses Teils vornimmt, der sich auf die Matrize (70) abstützt, wobei dieselbe Beanspruchung auch nach den Schritten c) und d), allerdings nur auf eine geringere freie Höhe (11) des Endteils ausgeübt wird.

6. Verfahren nach Anspruch 1, dadurch gekennzeichnet, daß der so erhaltene Anschlußnippelbearbeitet, beispielsweise mit einem Gewinde versehen oder direkt an ein Rohr angeschweißt werden kann.

7. Verfahren nach einem der vorstehenden Ansprüche 1 bis 6, dadurch gekennzeichnet, daß der Anschlußnippel keine Hinterschliffwinkel aufweist.

8. Verfahren nach einem der vorstehenden Ansprüche 1 bis 8, dadurch gekennzeichnet, daß eine weitere Stufe zum Umschlagen eines Randes (72, Fig. 9) vorgesehen ist.

9. Verfahren nach einem der vorstehenden Ansprüche 1 bis 8, dadurch gekennzeichnet, daß der Stempel mit einem Hohlraum (54') versehen ist, in dem der äußere Rand des halbfertigen Erzeugnisses aufgenommen wird.

0 048 701

_FIG.1_

10

16

14

20

18

12

_FIG. 2_

10

16

42

14

44

18

12

22

24

24

26

_FIG.3_

FIG.4

FIG.5

FIG.6

FIG.7

— FIG. 8 —

FIG. 9

FIG. 10

76   84   82   86

FIG. 11

80   78   84